(19) Europäisches Patentamt
European Patent Office
Office européen des brevets

(11) **EP 4 323 202 B1**

(12) **FASCICULE DE BREVET EUROPEEN**

(45) Date de publication et mention
de la délivrance du brevet:
**26.02.2025 Bulletin 2025/09**

(21) Numéro de dépôt: **22722296.5**

(22) Date de dépôt: **11.04.2022**

(51) Classification Internationale des Brevets (IPC):
**B60C 9/20** *(2006.01)*    **B60C 1/00** *(2006.01)*

(52) Classification Coopérative des Brevets (CPC):
**B60C 9/2006;** B60C 2001/0066; B60C 2009/1871;
B60C 2009/2064

(86) Numéro de dépôt international:
**PCT/FR2022/050684**

(87) Numéro de publication internationale:
**WO 2022/219280 (20.10.2022 Gazette 2022/42)**

(54) **PNEUMATIQUE ALLEGE COMPORTANT UNE COUCHE D'ELEMENTS DE RENFORCEMENT CIRCONFERENTIELS**

LEICHTGEWICHTREIFEN MIT EINER LAGE AUS UMFANGSVERSTÄRKUNGSELEMENTEN

LIGHTWEIGHT TYRE COMPRISING A LAYER OF CIRCUMFERENTIAL REINFORCING ELEMENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.04.2021 FR 2103739**

(43) Date de publication de la demande:
**21.02.2024 Bulletin 2024/08**

(73) Titulaire: **COMPAGNIE GENERALE DES ETABLISSEMENTS MICHELIN**
**63000 Clermont-Ferrand (FR)**

(72) Inventeurs:
• JOULIN, Emmanuel
63040 CLERMONT-FERRAND Cedex 9 (FR)
• FOURNIER, Orel
63040 CLERMONT-FERRAND Cedex 9 (FR)

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**WO-A1-2017/149223    WO-A1-2017/198952**

EP 4 323 202 B1

**Description**

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction tangente à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

On entend par « module d'élasticité » d'un mélange caoutchouteux, un module sécant d'extension à 10 % d'allongement et à température ambiante.

En ce qui concerne les compositions de caoutchouc, le module sécant d'élasticité à 10 % d'allongement est le module élastique du mélange mesuré lors d'une expérience de traction uniaxiale, à une valeur d'allongement de 0.1 (soit 10% d'allongement, exprimé en pourcentage). On impose une vitesse constante de traction uniaxiale à l'éprouvette, et on mesure son allongement et l'effort. La mesure est réalisée à l'aide d'une machine de traction de type INSTRON, à une température de 23°C, et une humidité relative de 50% (Norme ISO 23529). Les conditions de mesurage et d'exploitation des résultats pour déterminer l'allongement et la contrainte sont tels que décrits dans la norme NF ISO 37: 2012-03. On détermine la contrainte pour un allongement de 0.1 et on calcule le module sécant d'élasticité à 10 % d'allongement en faisant le rapport de cette valeur de contrainte sur la valeur d'allongement. L'homme du métier saura choisir et adapter les dimensions de l'éprouvette en fonction de la quantité de mélange accessible et disponible en particulier dans le cas de prélèvements d'éprouvette dans un produit fini tel que le pneumatique.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est pénalisée.

Il existe en effet des contraintes au niveau de l'armature de sommet et plus particulièrement des contraintes de cisaillement entre les couches de sommet, alliées à une élévation non négligeable de la température de fonctionnement au niveau des extrémités de la couche de sommet axialement la plus courte, qui ont pour conséquence l'apparition et la propagation de fissures de la gomme au niveau desdites extrémités.

Afin d'améliorer l'endurance de l'armature de sommet du type de pneumatique étudié, des solutions relatives à la structure et qualité des couches et/ou profilés de mélanges caoutchouteux qui sont disposés entre et/ou autour des extrémités de nappes et plus particulièrement des extrémités de la nappe axialement la plus courte ont déjà été apportées.

Il est notamment connu d'introduire une couche de mélange caoutchouteux entre les extrémités des couches de travail pour créer un découplage entre lesdites extrémités pour limiter les contraintes e cisaillement. De telles couches de découplage doivent toutefois présenter une très bonne cohésion. De telles couches de mélanges caoutchouteux sont par exemple décrites dans la demande de brevet WO 2004/076204.

Le brevet FR 1 389 428, pour améliorer la résistance à la dégradation des mélanges de caoutchouc situés au voisinage des bords d'armature de sommet, préconise l'utilisation, en combinaison avec une bande de roulement de faible hystérèse, d'un profilé de caoutchouc couvrant au moins les côtés et les bords marginaux de l'armature de sommet et constitué d'un mélange caoutchouteux à faible hystérésis.

Le brevet FR 2 222 232, pour éviter les séparations entre nappes d'armature de sommet, enseigne d'enrober les extrémités de l'armature dans un matelas de caoutchouc, dont la dureté Shore A est différente de celle de la bande de roulement surmontant ladite armature, et plus grande que la dureté Shore A du profilé de mélange caoutchouteux disposé entre les bords de nappes d'armature de sommet et armature de carcasse.

Les pneumatiques ainsi réalisés permettent effectivement d'améliorer les performances notamment en termes d'endurance.

Par ailleurs, il est connu pour réaliser des pneumatiques à bande de roulement très large ou bien pour conférer à des pneumatiques d'une dimension donnée des capacités de charges plus importantes d'introduire une couche d'éléments de renforcement circonférentiels. La demande de brevet WO 99/24269 décrit par exemple la présence d'une telle couche d'éléments de renforcement circonférentiels.

La couche d'éléments de renforcement circonférentiels est usuellement constituée par au moins un câble métallique enroulé pour former une spire dont l'angle de pose par rapport à la direction circonférentielle est inférieur à 2.5°.

En outre, l'usage de pneumatiques sur des véhicules pour poids-lourds de type « approche chantier » conduit les pneumatiques à subir des chocs lors de roulages sur des sols caillouteux. Ces chocs sont bien entendu néfastes quant aux performances en termes d'endurance.

Il est encore connu de l'homme du métier d'augmenter le nombre de nappes constituant l'armature sommet pour améliorer l'endurance du pneumatique à l'égard de tels chocs.

Quelle que soit la solution envisagée parmi les solutions telles que présentées précédemment, la présence d'une ou plusieurs couches d'éléments de renforcement supplémentaire conduit à une masse plus importante du pneumatique et à des coûts de fabrication des pneumatiques plus importants.

Il est encore connu du document WO 2017/149223 un pneumatique dont l'armature sommet est allégée en améliorant les propriétés d'endurance du pneumatique à l'égard de tels chocs. Les inventeurs ont toutefois mis en évidence que lors de roulage sur des sols extrêmement sollicitants pour les pneumatiques, les performances en termes d'endurance de tels pneumatiques pouvaient être dégradées, par exemple dans des conditions de roulage, combinant la vitesse du véhicule, la charge portée par le pneumatique et la nature du sol, particulièrement agressive. Il est en effet possible d'observer une dégradation des performances en termes d'endurance par exemple lors de roulage à vitesse relativement élevée sur des sols de type approche chantier très agressifs pour le pneumatique.

Il est par ailleurs connu du document WO 2017/198952 A1 de choisir des mélanges caoutchouteux des couches de calandrage des nappes de travail, de plus faible rigidité pour améliorer les performances de résistance au roulement des pneumatiques.

Les inventeurs se sont ainsi donnés pour mission de fournir des pneumatiques pour véhicules "Poids-Lourds" par exemple de type « approche chantier », dont la masse globale est limitée et dont les performances d'endurance au regard des chocs subis sur la bande de roulement sont améliorées quelles que soient la nature du sol et les conditions de roulage.

Ce but est atteint selon l'invention par pneumatique destiné à être monté sur une jante creuse de type 15° drop center, comprenant une armature de carcasse radiale, ledit pneumatique comprenant une armature de sommet comprenant deux couches de sommet de travail, chacune formée d'éléments de renforcement insérés entre deux couches de calandrage de mélange caoutchouteux croisés d'une couche à l'autre en faisant avec la direction circonférentielle des angles ($\alpha$1, $\alpha$2) supérieurs à 8°, lesdits angles $\alpha$1 et $\alpha$2 étant orientés de part et d'autre de la direction circonférentielle, et au moins une couche d'éléments de renforcement circonférentiels, l'armature de sommet étant coiffée radialement d'une bande de roulement, ladite bande de roulement étant réunie à deux bourrelets par l'intermédiaire de deux flancs, lesdites deux couches de sommet de travail et ladite au moins une couche d'éléments de renforcement circonférentiels étant seules présentes pour constituer l'armature de sommet sur au moins 75% de la largeur axiale de l'armature sommet, les éléments de renforcement de la couche de travail radialement la plus extérieure formant un angle $\alpha$2 avec la direction circonférentielle supérieur en valeur absolue à l'angle $\alpha$1 formé par les éléments de renforcement de la couche de travail radialement la plus intérieure avec la direction circonférentielle, la valeur absolue de la différence entre les valeurs absolues des angles $\alpha$2 et $\alpha$1 étant supérieure à 7°, l'angle moyen $\alpha$ satisfaisant la relation :

$$13+131*\exp(-L/100) < \alpha < 28+110*\exp(-L/100),$$

$\alpha$ étant défini par la relation $\alpha$ = Arctan((tan($|\alpha1|$)*tan($|\alpha2|$))$^{1/2}$), L étant la largeur maximum du pneumatique mesurée selon la direction axiale et exprimée en mm, le module sécant d'élasticité à 10 % d'allongement d'au moins une couche de calandrage d'au moins une couche de sommet de travail étant inférieur à 8,5 MPa.

Au sens de l'invention, une jante creuse de type 15° drop center ou jante à seat coincé est une jante monobloc, telle que définie dans l'ETRTO, dont les sièges destinés à recevoir les bourrelets du pneumatique présentent une forme tronconique, l'angle formé avec la direction axiale étant sensiblement équivalant à 15°. Ces sièges sont par ailleurs prolongés par des crochets de jante de hauteur réduite par rapport à des crochets de jantes à bases plates dont les sièges de jante présentent des formes sensiblement cylindriques.

La largeur L est mesurée sur un pneumatique monté sur sa jante nominale et gonflé à sa pression nominale, selon l'ETRTO, et est exprimée en millimètres.

Les angles $\alpha1$ et $\alpha2$, exprimés en degré, sont mesurés sur une coupe du pneumatique. Les mesures d'angles sont selon l'invention réalisées au niveau du plan médian circonférentiel.

Avantageusement selon l'invention, la valeur maximale de $\tan(\delta)$, noté $\tan(\delta)_{max}$, de ladite au moins une couche de calandrage, d'au moins une couche de sommet de travail, dont le module sécant d'élasticité à 10 % d'allongement est inférieur à 8.5, est inférieure à 0.100.

Le facteur de perte $\tan(\delta)$ est une propriété dynamique de la couche de mélange caoutchouteux. Il est mesuré sur un viscoanalyseur (Metravib VA4000), selon la norme ASTM D 5992-96. On enregistre la réponse d'un échantillon de composition vulcanisée (éprouvette cylindrique de 2 mm d'épaisseur et de 78 $mm^2$ de section), soumis à une sollicitation sinusoïdale en cisaillement simple alterné, à la fréquence de 10Hz, à une température de 100°C. On effectue un balayage en amplitude de déformation de 0,1 à 50% (cycle aller), puis de 50% à 1% (cycle retour). Pour le cycle retour, on indique la valeur maximale de $\tan(\delta)$ observée, noté $\tan(\delta)_{max}$.

L'homme du métier saura choisir et adapter les dimensions de l'éprouvette en fonction de la quantité de mélange accessible et disponible en particulier dans le cas de prélèvements d'éprouvette dans un produit fini tel que le pneumatique.

La résistance au roulement est la résistance qui apparaît lorsque le pneumatique roule. Elle est représentée par les pertes hystérétiques liées à la déformation du pneumatique durant une révolution. Les valeurs de fréquence liées à la révolution du pneumatique correspondent à des valeurs de $\tan(\delta)$ mesurée entre 30 et 100°C. La valeur de $\tan(\delta)$ à 100 °C correspond ainsi à un indicateur de la résistance au roulement du pneumatique en roulage.

Selon un mode préféré de réalisation de l'invention, le module sécant d'élasticité à 10 % d'allongement des couches de calandrage desdites deux couches de sommet de travail est inférieur à 8,5 MPa et de préférence encore, la valeur $\tan(\delta)_{max}$ des couches de calandrage desdites au moins deux couches de sommet de travail est inférieure à 0.100.

Selon un mode de réalisation préféré de l'invention, ladite au moins une couche de calandrage, d'au moins une couche de sommet de travail, dont le module sécant d'élasticité à 10 % d'allongement est inférieure à 8.5 est un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée :

   a) soit par du noir de carbone de surface spécifique BET supérieure à 60 $m^2$/g,

      i. employé à un taux compris entre 20 et 40 pce lorsque l'indice de structure du noir (COAN) est supérieur à 85,

      ii. employé à un taux compris entre 20 et 60 pce lorsque l'indice de structure du noir (COAN) est inférieur à 85,

   b) soit par du noir de carbone de surface spécifique BET inférieure à 60 $m^2$/g, quelle que soit son indice de structure, employé à un taux compris entre 20 et 80 pce, et de préférence entre 30 et 50 pce,

   c) soit par une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse de surface spécifique BET comprise entre 30 et 260 $m^2$/g employée à un taux compris entre 20 et 80 pce, et de préférence entre 30 et 50 pce,

   d) soit par un coupage de noir de carbone décrit en (a) et/ou de noir de carbone décrit en (b) et/ou une charge blanche décrite en (c), dans lequel le taux global de charge est compris entre 20 et 80 pce, et de préférence entre 40 et 60 pce.

La mesure de surface spécifique BET est effectuée selon la méthode de BRUNAUER, EMMET et TELLER décrite dans "The Journal of the American Chemical Society", vol. 60, page 309, février 1938, correspondant à la norme NFT 45007 de novembre 1987.

L'indice de structure du noir COAN (Compressed Oil Absorption Number) est mesuré selon la norme ASTM D3493.

Dans le cas d'utilisation de charge claire ou charge blanche, il est nécessaire d'utiliser un agent de couplage et/ou de recouvrement choisi parmi les agents connus de l'homme de l'art. Comme exemples d'agents de couplage préférentiel, on peut citer les alcoxysilanes sulfurés du type polysulfure de bis-(3-trialcoxysilylpropyle), et parmi ceux-ci notamment le tétrasulfure de bis-(3-triéthoxysilylpropyle) commercialisé par la Société DEGUSSA sous les dénominations Si69 pour le produit liquide pur et X50S pour le produit solide (coupage 50/50 en poids avec du noir N330). Comme exemples d'agents de recouvrement on peut citer un alcool gras, un alkylalcoxysilane tel qu'un hexadécyltriméthoxy ou triéthoxysilane respectivement commercialisés par la Société DEGUSSA sous les dénominations Si116 et Si216, la diphénylguanidine, un polyéthylène glycol, une huile silicone éventuellement modifié au moyen des fonctions OH ou alcoxy. L'agent de recouvrement et/ou de couplage est utilisé dans un rapport pondéral par rapport à la charge ≥ à 1/100 et ≤ à 20/100, et préférentiellement compris entre 2/100 et 15/100 lorsque la charge claire représente la totalité de la charge renforçante et compris entre 1/100 et 20/100 lorsque la charge renforçante est constituée par un coupage de noir de carbone et de charge claire.

Comme autres exemples de charges renforçantes ayant la morphologie et les fonctions de surface SiOH et/ou AlOH des matières de type silice et/ou alumine précédemment décrites et pouvant être utilisées selon l'invention en remplacement partiel ou total de celles-ci, on peut citer les noirs de carbone modifiés soit au cours de la synthèse par addition à l'huile d'alimentation du four d'un composé du silicium et/ou d'aluminium soit après la synthèse en ajoutant, à une suspension aqueuse de noir de carbone dans une solution de silicate et/ou d'aluminate de sodium, un acide de façon à recouvrir au moins partiellement la surface du noir de carbone de fonctions SiOH et/ou AlOH. Comme exemples non limitatifs de ce type de charges carbonées avec en surface des fonctions SiOH et/ou AlOH, on peut citer les charges type CSDP décrites dans la Conférence N° 24 du Meeting ACS, Rubber Division, Anaheim, Californie, 6-9 mai 1997 ainsi que celles de la demande de brevet EP-A-0 799 854.

Lorsqu'une charge claire est utilisée comme seule charge renforçante, les propriétés d'hystérèse et de cohésion sont obtenues en utilisant une silice précipitée ou pyrogénée, ou bien une alumine précipitée ou bien encore un aluminosilicate de surface spécifique BET comprise entre 30 et 260 m²/g. Comme exemples non limitatifs de ce type de charge, on peut citer les silices KS404 de la Société Akzo, Ultrasil VN2 ou VN3 et BV3370GR de la Société Degussa, Zeopol 8745 de la Société Huber, Zeosil 175MP ou Zeosil 1165MP de la société Rhodia, HI-SIL 2000 de la Société PPG etc...

Parmi les élastomères diéniques pouvant être utilisés en coupage avec le caoutchouc naturel ou un polyisoprène synthétique à majorité d'enchaînements cis-1,4, on peut citer un polybutadiène (BR) de préférence à majorité d'enchaînements cis-1,4, un copolymère styrène-butadiène (SBR) solution ou émulsion, un copolymère butadiène-isoprène (BIR) ou bien encore un terpolymère styrène-butadiène-isoprène (SBIR). Ces élastomères peuvent être des élastomères modifiés en cours de polymérisation ou après polymérisation au moyen d'agents de ramification comme un divinylbenzène ou d'agents d'étoilage tels que des carbonates, des halogénoétains, des halogénosiliciums ou bien encore au moyen d'agents de fonctionnalisation conduisant à un greffage sur la chaîne ou en bout de chaîne de fonctions oxygénées carbonyle, carboxyle ou bien d'une fonction amine comme par exemple par action de la diméthyl ou de la diéthylamino benzophénone. Dans le cas de coupages de caoutchouc naturel ou de polyisoprène synthétique à majorité d'enchaînements cis-1,4 avec un ou plusieurs des élastomères diéniques, mentionnés ci-dessus, le caoutchouc naturel ou le polyisoprène synthétique est utilisé de préférence à un taux majoritaire et plus préférentiellement à un taux supérieur à 70 pce.

Les résultats obtenus avec des pneumatiques conformes à l'invention ont effectivement mis en évidence que les performances en termes d'endurance peuvent être améliorées, l'armature sommet du pneumatique étant allégée, quelles que soient la nature du sol et les conditions de roulage. L'allègement de l'armature sommet du pneumatique s'accompagne par ailleurs d'une simplification de fabrication et d'une diminution des coûts de fabrication.

Contre toute attente, les résultats ont effectivement mis en évidence que les pneumatiques selon l'invention peuvent être allégés en diminuant le nombre de couches constitutives de l'armature sommet tout en améliorant les propriétés d'endurance du sommet du pneumatique notamment à l'égard de chocs apparaissant sur la bande de roulement quelles que soient la nature du sol et les conditions de roulage.

Il est en effet connu de l'homme du métier que pour améliorer les performances d'endurance de l'armature sommet d'un pneumatique à l'égard de ce type de chocs, il est usuel d'augmenter le nombre de couches d'éléments de renforcement ainsi que d'augmenter la rigidité des mélanges de calandrage.

Les inventeurs pensent interpréter ces résultats du fait de l'angle formé avec la direction circonférentielle par les éléments de renforcement de la couche de sommet de travail radialement la plus intérieure qui est plus petit en valeur absolue que celui formé par les éléments de renforcement de la couche de sommet de travail radialement la plus extérieure. Ils ont constaté que cet angle plus petit semble entraîner un retard dans la prise de tension par les éléments de renforcement lors d'un tel choc. Usuellement, lors de chocs comparables à ceux observés lors d'un roulage sur sol caillouteux la rupture d'éléments de renforcement si elle intervient s'observe sur la couche radialement la plus intérieure. Ces constats semblent indiquer que face à ce type d'agressions, la différence d'angles des éléments de renforcement entre les deux couches de sommet de travail permet d'améliorer les performances d'endurance du pneumatique tout en diminuant le nombre de couches de l'armature de sommet.

La valeur de l'angle moyen α, augmentée par rapport à des valeurs plus usuelles connues de pneumatiques usuels pour ce type d'application, améliore encore les propriétés d'endurance du sommet du pneumatique à l'égard de chocs apparaissant sur la bande de roulement. La présence de ladite au moins une couche d'éléments de renforcement circonférentiels autorise un angle moyen α des éléments de renforcements des deux couches de sommet de travail supérieur à l'angle moyen défini par les éléments de renforcements des deux couches de sommet de travail dans les pneumatiques plus usuels. En effet, la rigidité circonférentielle apportée par la présence de ladite au moins une couche d'éléments de renforcement circonférentiels permet d'augmenter l'angle moyen formé par les éléments de renforcement de chacune des couches de sommet de travail avec la direction circonférentielle, ledit angle moyen semblant ainsi favoriser le fonctionnement du pneumatique et notamment sa manœuvrabilité lors de roulages sous fortes charges ou bien avec un angle formé avec la direction d'avancement très important. Les inventeurs ont ainsi su mettre en évidence que les propriétés dynamiques du pneumatique, notamment la rigidité de dérive, sont conservées voire améliorées quel que soit l'usage.

Par contre, les inventeurs pensent également avoir mis en évidence que l'angle formé avec la direction circonférentielle par les éléments de renforcement de la couche de sommet de travail radialement la plus intérieure qui est plus petit en valeur absolue que celui formé par les éléments de renforcement de la couche de sommet de travail radialement la plus extérieure conduit lors de sollicitations extrêmes notamment lors de roulage à vitesse soutenue à de fortes sollicitations des éléments de renforcement de la couche de travail radialement la plus intérieure pouvant nuire aux performances en termes d'endurance.

L'utilisation de mélange de calandrage à faible rigidité pour cette couche de sommet de travail radialement la plus intérieure, conformément à l'invention, est encore un facteur non favorable pour l'endurance de cette couche de sommet de travail radialement la plus intérieure lors de fortes sollicitations telles que des roulages à vitesse soutenue.

Habituellement, les modules sécants d'élasticité à 10 % d'allongement des calandrages des couches de sommet sont supérieurs à 8.5 MPa et le plus souvent supérieurs à 10 MPa. De tels modules d'élasticité sont notamment requis pour permettre de limiter les mises en compression des éléments de renforcement des couches de sommet de travail notamment lorsque le véhicule suit un parcours sinueux. En effet, les cisaillements selon la direction axiale qui s'opèrent sur la bande de roulement dans la zone de la surface de contact avec le sol conduisent à la mise en compression des éléments de renforcement d'une couche de sommet de travail.

Les inventeurs ont su mettre en évidence que la couche d'éléments de renforcement circonférentiels autorise des choix de modules d'élasticité des mélanges caoutchouteux des couches de calandrages des couches de sommet de travail plus faibles sans nuire aux propriétés d'endurance du pneumatique du fait des mises en compression des éléments de renforcement desdites couches de sommet de travail telles que décrites précédemment.

Les inventeurs ont encore su mettre en évidence que la cohésion des couches de calandrages des couches de sommet de travail, lorsqu'elle présente un module sécant d'élasticité à 10 % d'allongement inférieur à 8.5 MPa, reste satisfaisante.

Au sens de l'invention, un mélange caoutchouteux cohésif est un mélange caoutchouteux notamment robuste à la fissuration. La cohésion d'un mélange est ainsi évaluée par un test de fissuration en fatigue réalisé sur une éprouvette « PS » (pure shear). Il consiste à déterminer, après entaillage de l'éprouvette, la vitesse de propagation de fissure « Vp » (nm/cycle) en fonction du taux de restitution d'énergie « E » (J/m$^2$). Le domaine expérimental couvert par la mesure est compris dans la plage -20°C et +150°C en température, avec une atmosphère d'air ou d'azote. La sollicitation de l'éprouvette est un déplacement dynamique imposé d'amplitude comprise entre 0.1mm et 10mm sous forme de sollicitation de type impulsionnel (signal « haversine » tangent) avec un temps de repos égal à la durée de l'impulsion ; la fréquence du signal est de l'ordre de 10Hz en moyenne.

La mesure comprend 3 parties :

- Une accommodation de l'éprouvette « PS », de 1000 cycles à 27% de déformation.

- une caractérisation énergétique pour déterminer la loi « E » = f (déformation). Le taux de restitution d'énergie « E » est égal à W0*h0, avec W0 = énergie fournie au matériau par cycle et par unité de volume et h0 = hauteur initiale de l'éprouvette. L'exploitation des acquisitions « force / déplacement » donne ainsi la relation entre « E » et l'amplitude de la sollicitation.

- La mesure de fissuration, après entaillage de l'éprouvette « PS ». Les informations recueillies conduisent à déterminer la vitesse de propagation de la fissure « Vp » en fonction du niveau de sollicitation imposé « E ».

Les inventeurs ont notamment mis en évidence que la présence d'au moins une couche d'éléments de renforcement circonférentiels contribue à une moindre évolution de la cohésion des couches de calandrages des couches de sommet de travail. En effet, les conceptions de pneumatiques plus usuelles comportant notamment des couches de calandrages des couches de sommet de travail avec des modules sécants d'élasticité à 10 % d'allongement supérieurs à 8.5 MPa, conduisent à une évolution de la cohésion desdites couches de calandrages des couches de sommet de travail, celle-ci tendant à s'affaiblir. Les inventeurs constatent que la présence d'au moins une couche d'éléments de renforcement circonférentiels qui contribue à limiter les mises en compression des éléments de renforcement des couches de sommet de travail conduit à une faible évolution de la cohésion des couches de calandrages. Les inventeurs considèrent ainsi que la cohésion des couches de calandrages des couches de sommet de travail, plus faible que ce qui existe dans les conceptions de pneumatiques plus usuelles, est satisfaisante dans la conception du pneumatique selon l'invention.

En outre, les mélanges moins rigides des calandrages des couches de sommet de travail associés à une couche d'éléments renforcement circonférentiels contribuent à limiter les élévations de température générées lorsqu'ils sont soumis à des contraintes de cisaillements.

Par ailleurs, l'allègement de l'armature de sommet conduit à une diminution de l'épaisseur globale du sommet du pneumatique. Les inventeurs ont encore ainsi su mettre en évidence que lors de roulage à vitesse soutenue, en comparaison de pneumatiques de conception plus usuelle, la température du sommet du pneumatique est inférieure.

L'association de l'armature de sommet allégée telle que décrite selon l'invention avec des mélanges de calandrage à faible rigidité qui semble pouvoir compromettre les propriétés d'endurance du pneumatique dans des conditions extrêmes d'utilisation conduit en fait à une conservation, voire une amélioration, de la performance d'endurance du pneumatique. Les inventeurs pensent interpréter ce résultat par des effets cumulés sur la température du sommet du pneumatique, d'une part de la conception allégée de l'armature sommet et d'autre part de la présence de mélanges de calandrage moins rigide en présence d'une couche d'éléments renforcement circonférentiels, la combinaison de ces éléments semblant inverser les effets attendus en termes d'endurance.

Avantageusement selon l'invention, le ratio d'utilisation du potentiel de rupture F2/FR2 de la couche de travail radialement la plus extérieure est inférieur à 1/6, et dans lequel :

FR2 est la force rupture en extension uniaxiale de chacun des câbles de la couche de travail radialement la plus extérieure,

$$F2 = p_2 * Tc * [(\tan(|\alpha1|)/(\tan(|\alpha1|)+\tan(|\alpha2|))) / \cos^2(|\alpha2|) + C_F],$$

avec

$$Tc = 0.078 * P * Rs * (1-(Rs^2-R_L^2)/(2*Rt*Rs)),$$

P : la pression de gonflage nominale du pneumatique selon l'ETRTO,

$$C_F = 0.00035*(\min((L-80) / \sin(|\alpha1|), (L-80) / \sin(|\alpha2|), 480)-480),$$

$p_2$ : le pas de pose des éléments de renforcement de la couche de sommet de travail radialement la plus extérieure, mesuré perpendiculairement aux éléments de renforcement au niveau du plan médian circonférentiel,

$$Rs = Re - Es,$$

Re : rayon extérieur du pneumatique mesuré au point radialement le plus extérieur sur la surface de la bande de roulement du pneumatique, ladite surface étant extrapolée pour combler les éventuels creux,

Es : distance radiale entre le point radialement le plus à l'extérieur du pneumatique et sa projection orthogonale sur la face radialement extérieure d'un élément de renforcement de la couche de sommet de travail radialement la plus intérieure,

$R_L$ : moyenne des rayons des points axialement les plus à l'extérieur de la partie principale de la couche d'armature de carcasse de chaque côté du pneumatique,

Rt : le rayon du cercle passant par trois points situés sur la surface extérieure de la bande de roulement en dehors des creux, définis à partir d'une extrémité d'épaulement à des distances axiales respectives égales à ¼, ½ et ¾ de la largeur axiale de la bande de roulement.

L'épaisseur Es et le pas $p_2$ sont mesurés sur une coupe du pneumatique et sont exprimés en millimètres.

La coupe méridienne du pneumatique est définie conformément à l'invention telle que les barycentres des tringles forment une droite orientée axialement, lesdits barycentres étant distants l'un de l'autre d'une distance égale à la largeur de la jante nominale J augmentée de 20 mm et diminuée de deux fois la distance mesurée axialement entre un barycentre d'une tringle et un point de la surface extérieure du pneumatique.

Les inventeurs font encore le constat que le choix de la valeur absolue de la différence entre les valeurs absolues des angles précités α1 et α2 associé à l'angle moyen α et au ratio d'utilisation du potentiel de rupture F2/FR2 tels que définis selon cette réalisation avantageuse de l'invention peuvent permettre d'éliminer la couche de protection usuellement mise en place radialement à l'extérieur des autres couches de l'armature de sommet. Une telle couche est habituellement présente pour être sacrifiée en cas d'agressions du pneumatique de type coupures pouvant venir altérer l'intégrité d'éléments de renforcement métalliques par des phénomènes de corrosion associés à la fatigue desdits éléments de renforcement. Les inventeurs font effectivement le constat que les éléments de renforcement de la couche de sommet de travail radialement la plus extérieure, d'un pneumatique selon l'invention, sont moins sollicités lors du gonflage du pneumatique ou bien lors de son utilisation en roulage normal que les éléments de renforcement d'une couche de sommet de travail radialement la plus extérieure d'un pneumatique plus usuel ; un tel pneumatique plus usuel présente des différences d'angles en valeur absolue entre les éléments de renforcement des différentes couches de travail plus petites, un angle des éléments de renforcement de la couche de travail radialement la plus intérieure supérieur ou égal en valeur absolue à celui des éléments de renforcement de la couche de travail radialement la plus extérieure et un ratio d'utilisation du potentiel de rupture F2/FR2 plus important. Les éléments de renforcement de la couche de sommet de travail radialement la plus extérieure d'un pneumatique selon l'invention présentent ainsi des propriétés d'endurance bien supérieures à ceux d'un pneumatique plus usuel ; les inventeurs font ainsi le constat que la suppression de la couche de protection est rendue possible et permet de contribuer à l'allègement du pneumatique et la limitation des montées en température dans la zone du sommet de pneumatique.

Selon un mode de réalisation préféré de l'invention, la valeur absolue de la différence entre les valeurs absolues des angles α2 et α1 est supérieure ou égale à 10° et de préférence supérieure à 14°. Selon ce mode de réalisation, et conformément aux interprétations données ci-dessus, il va être possible d'améliorer encore les performances d'endurance des éléments de renforcement de la couche de travail radialement la plus extérieure et/ou améliorer encore les performances du pneumatique à l'égard de chocs tels que ceux subis lors de roulage sur des sols caillouteux.

De préférence, la valeur absolue de la différence entre les valeurs absolues des angles α2 et α1 est inférieure à 25° et de préférence encore inférieure à 20°. Au-delà de ces valeurs, le pneumatique serait susceptible de présenter des usures irrégulières dans certaines conditions d'utilisation.

Avantageusement encore selon l'invention, le ratio d'utilisation du potentiel de rupture F2/FR2 de la couche de travail radialement la plus extérieure est inférieur à 1/8. Un tel ratio d'utilisation du potentiel de rupture F2/FR2 contribue encore à améliorer les performances d'endurance des éléments de renforcement de la couche de travail radialement la plus extérieure lors de l'utilisation du pneumatique.

De préférence selon l'invention, le ratio d'utilisation du potentiel de rupture F1/FR1 de la couche de travail radialement la plus intérieure est inférieur à 1/3, dans lequel :

FR1 est la force rupture en extension uniaxiale de chacun des câbles de la couche de travail radialement la plus intérieure,

$$F1 = p_1 * Tc * [(\tan(|\alpha 2|)/(\tan(|\alpha 1|)+\tan(|\alpha 2|))) / \cos^2(|\alpha 1|) + C_F],$$

avec

$p_1$ : le pas de pose des éléments de renforcement de la couche de sommet de travail radialement la plus intérieure, mesuré perpendiculairement aux éléments de renforcement au niveau du plan médian circonférentiel.

De préférence encore, le ratio d'utilisation du potentiel de rupture F1/FR1 de la couche de travail radialement la plus intérieure est au moins 30 % supérieur au ratio d'utilisation du potentiel de rupture F2/FR2 de la couche de travail radialement la plus extérieure.

Selon un mode de réalisation avantageux de l'invention, la couche de sommet de travail axialement la plus large est radialement à l'intérieur des autres couches de sommet de travail.

Selon un mode de réalisation préféré de l'invention, optimisant l'amincissement du sommet du pneumatique, les deux couches de sommet de travail et ladite au moins une couche d'éléments de renforcement circonférentiels sont seules présentes pour constituer l'armature de sommet sur la totalité de la largeur axiale de l'armature sommet.

Selon une variante avantageuse de réalisation de l'invention, la couche d'éléments de renforcement circonférentiels présente une largeur axiale supérieure à 0.5xS.

S est la largeur maximale axiale du pneumatique, lorsque ce dernier est monté sur sa jante de service et gonflé à sa pression recommandée.

Les largeurs axiales des couches d'éléments de renforcement sont mesurées sur une coupe transversale d'un pneumatique, le pneumatique étant donc dans un état non gonflé.

Selon un mode de réalisation préférée de l'invention, la couche d'éléments de renforcement circonférentiels est radialement disposée entre deux couches de sommet de travail.

Selon ce mode de réalisation de l'invention, la couche d'éléments de renforcement circonférentiels permet de limiter de manière plus importante les mises en compression des éléments de renforcement de l'armature de carcasse qu'une couche semblable mise en place radialement à l'extérieur des couches de travail. Elle est préférablement radialement séparée de l'armature de carcasse par au moins une couche de travail de façon à limiter les sollicitations desdits éléments de renforcement et ne pas trop les fatiguer.

Avantageusement encore selon l'invention, les largeurs axiales des couches de sommet de travail radialement adjacentes à ladite au moins une couche d'éléments de renforcement circonférentiels sont supérieures à la largeur axiale de ladite au moins une couche d'éléments de renforcement circonférentiels et de préférence, lesdites couches de sommet de travail adjacentes à ladite au moins une couche d'éléments de renforcement circonférentiels sont de part et d'autre du plan équatorial et dans le prolongement axial immédiat de ladite au moins une couche d'éléments de renforcement circonférentiels couplées sur une largeur axiale, pour être ensuite découplées par une couche de mélange de caoutchouc au moins sur le restant de la largeur commune aux dites deux couches de travail.

Au sens de l'invention, des couches de sommet de travail sont dites couplées si les éléments de renforcement respectifs de chacune des couches sont séparés radialement d'une distance inférieure au diamètre moyen du cercle circonscrit aux éléments de renforcement, ladite épaisseur de caoutchouc étant mesurée radialement entre les génératrices respectivement radialement supérieure et inférieure desdits éléments de renforcement.

Le diamètre moyen du cercle circonscrit aux éléments de renforcement est défini comme étant le diamètre moyen des cercles circonscrits aux éléments de renforcement de chacune des couches de sommet de travail.

La présence de tels couplages entre les couches de sommet de travail adjacentes à la couche d'éléments de renforcement circonférentiels permet la diminution des contraintes de tension agissant sur les éléments circonférentiels axialement le plus à l'extérieur et situé le plus près du couplage.

L'épaisseur des profilés de découplage entre les couches de sommet de travail, axialement extérieurs à la zone de couplage, mesurée au droit des extrémités de la nappe de travail la moins large, sera au moins égale à 2 mm, et préférentiellement supérieure à 2,5 mm.

Selon un mode de réalisation avantageux de l'invention, les éléments de renforcement d'au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

Selon une réalisation préférée, le module sécant des éléments de renforcement à 0,7 % d'allongement est inférieur à 100 GPa et supérieur à 20 GPa, de préférence compris entre 30 et 90 GPa et de préférence encore inférieur à 80 GPa.

De préférence également, le module tangent maximum des éléments de renforcement est inférieur à 130 GPa et de préférence encore inférieur à 120 GPa.

Les modules exprimés ci-dessus sont mesurés sur une courbe contrainte de traction en fonction de l'allongement déterminée avec une précontrainte de 20 MPa, la contrainte de traction correspondant à une tension mesurée ramenée à la section de métal de l'élément de renforcement. Les mesures sont réalisées sur des câbles extraits du pneumatique sur une partie de la couche d'éléments de renforcement circonférentiels s'étendant depuis une extrémité axiale de ladite couche sur une largeur axiale de 50 mm vers l'intérieur de ladite couche.

Les modules des mêmes éléments de renforcement peuvent être mesurés sur une courbe contrainte de traction en fonction de l'allongement déterminée avec une précontrainte de 10 MPa, la contrainte de traction correspondant à une tension mesurée ramenée à la section globale de l'élément de renforcement. La section globale de l'élément de renforcement est la section d'un élément composite constitué de métal et de caoutchouc, ce dernier ayant notamment pénétré l'élément de renforcement pendant la phase de cuisson du pneumatique.

Selon cette formulation relative à la section globale de l'élément de renforcement, les éléments de renforcement des parties axialement extérieures et de la partie centrale d'au moins une couche d'éléments de renforcement circonférentiels sont des éléments de renforcement métalliques présentant un module sécant à 0,7 % d'allongement compris entre 5 et 60 GPa et un module tangent maximum inférieur à 75 GPa.

Selon une réalisation préférée, le module sécant des éléments de renforcement à 0,7 % d'allongement est inférieur à 50 Gpa et supérieur à 10 GPa, de préférence compris entre 15 et 45 GPa et de préférence encore inférieur à 40 GPa.

De préférence également, le module tangent maximum des éléments de renforcement est inférieur à 65 GPa et de préférence encore inférieur à 60 GPa.

Selon un mode de réalisation préféré, les éléments de renforcements d'au moins une couche d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs.

Les différentes caractéristiques des éléments de renforcement énoncées ci-dessus sont mesurées sur des éléments de renforcement prélevés sur des pneumatiques.

Des éléments de renforcement plus particulièrement adaptés à la réalisation d'au moins une couche d'éléments de renforcement circonférentiels selon l'invention sont par exemple des assemblages de formule 21.23, dont la construction est 3x(0.26+6x0.23) 4.8/7.5 SS ; ce câble à torons est constitué de 21 fils élémentaires de formule 3 x (1+6), avec 3 torons tordus ensembles chacun constitué de 7 fils, un fil formant une âme centrale de diamètre égal à 26/100 mm et 6 fils enroulés de diamètre égal à 23/100 mm. Un tel câble présente un module sécant à 0,7% égal à 45 GPa et un module tangent maximum égal à 98 GPa, mesurés sur une courbe contrainte de traction en fonction de l'allongement déterminée avec une précontrainte de 20 MPa, la contrainte de traction correspondant à une tension mesurée ramenée à la section de métal de l'élément de renforcement. Sur une courbe contrainte de traction en fonction de l'allongement déterminée avec une précontrainte de 10 MPa, la contrainte de traction correspondant à une tension mesurée ramenée à la section globale de l'élément de renforcement, ce câble de formule 21.23 présente un module sécant à 0,7% égal à 23 GPa et un module tangent maximum égal à 49 GPa.

De la même façon, un autre exemple d'éléments de renforcement est un assemblage de formule 21.28, dont la construction est 3x(0.32+6x0.28) 5.6/9.3 SS. Ce câble présente un module sécant à 0,7% égal à 56 GPa et un module tangent maximum égal à 102 GPa, mesurés sur une courbe contrainte de traction en fonction de l'allongement déterminée avec une précontrainte de 20 MPa, la contrainte de traction correspondant à une tension mesurée ramenée à la section de métal de l'élément de renforcement. Sur une courbe contrainte de traction en fonction de l'allongement déterminée avec une précontrainte de 10 MPa, la contrainte de traction correspondant à une tension mesurée ramenée à la section globale de l'élément de renforcement, ce câble de formule 21.28 présente un module sécant à 0,7% égal à 27 GPa et un module tangent maximum égal à 49 GPa.

L'utilisation de tels éléments de renforcement dans au moins une couche d'éléments de renforcement circonférentiels permet notamment de conserver des rigidités de la couche satisfaisante y compris après les étapes de conformation et de cuisson dans des procédés de fabrication usuels.

Selon un deuxième mode de réalisation de l'invention, les éléments de renforcement circonférentiels peuvent être formées d'éléments métalliques inextensibles et coupés de manière à former des tronçons de longueur très inférieure à la circonférence de la couche la moins longue, mais préférentiellement supérieure à 0,1 fois ladite circonférence, les coupures entre tronçons étant axialement décalées les unes par rapport aux autres. De préférence encore, le module d'élasticité à la traction par unité de largeur de la couche additionnelle est inférieur au module d'élasticité à la traction, mesuré dans les mêmes conditions, de la couche de sommet de travail la plus extensible. Un tel mode de réalisation permet de conférer, de manière simple, à la couche d'éléments de renforcement circonférentiels un module pouvant facilement être ajusté (par le choix des intervalles entre tronçons d'une même rangée), mais dans, tous les cas, plus faible, que le module de la couche constituée des mêmes éléments métalliques mais continus, le module de la couche additionnelle étant mesuré sur une couche vulcanisée d'éléments coupés, prélevée sur le pneumatique.

Selon un troisième mode de réalisation de l'invention, les éléments de renforcement circonférentiels sont des éléments métalliques ondulés, le rapport a/λ de l'amplitude d'ondulation sur la longueur d'onde étant au plus égale à 0,09. De préférence, le module d'élasticité à la traction par unité de largeur de la couche additionnelle est inférieur au module d'élasticité à la traction, mesuré dans les mêmes conditions, de la couche de sommet de travail la plus extensible.

Les éléments métalliques sont préférentiellement des câbles d'acier.

Selon un mode de réalisation préféré de l'invention, les éléments de renforcement des couches de sommet de travail sont des câbles métalliques inextensibles.

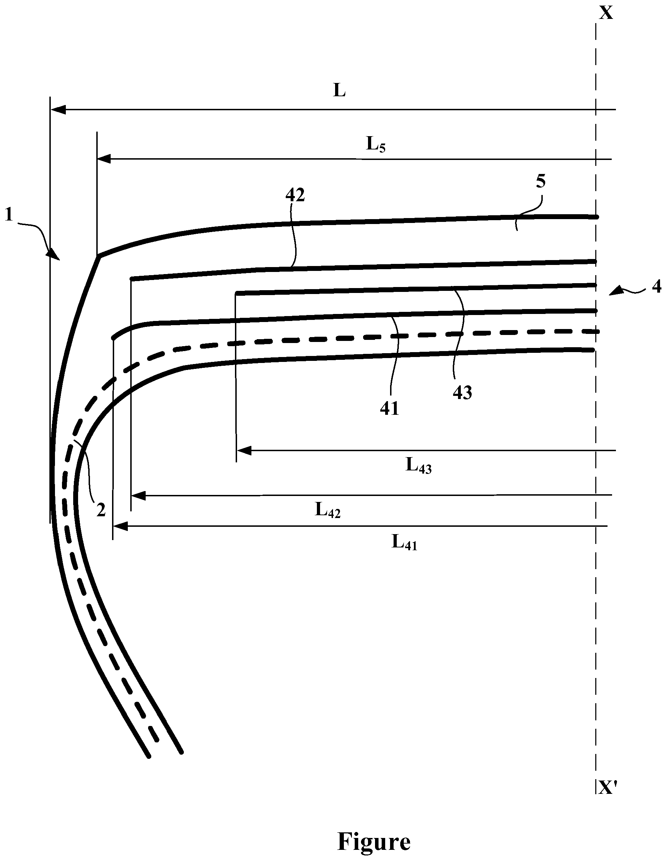

D'autres détails et caractéristiques avantageux de l'invention ressortiront ci-après de la description des exemples de réalisation de l'invention en référence à la figure qui représente une vue méridienne d'un schéma d'un pneumatique selon un mode de réalisation de l'invention.

La figure n'est pas représentée à l'échelle pour en simplifier la compréhension. La figure ne représente qu'une demi-vue d'un pneumatique qui se prolonge de manière symétrique par rapport à l'axe XX' qui représente le plan médian circonférentiel, ou plan équatorial, d'un pneumatique.

Sur la figure, le pneumatique 1 est de dimension 315/70 R 22.5. Ledit pneumatique 1 comprend une armature de carcasse radiale 2 ancrée dans deux bourrelets, non représentés sur la figure. L'armature de carcasse est formée d'une seule couche de câbles métalliques. Cette armature de carcasse 2 est frettée par une armature de sommet 4, formée radialement de l'intérieur à l'extérieur :

- d'une première couche de travail 41 formée de câbles métalliques orientés d'un angle égal à 18°,

- d'une couche d'éléments de renforcement circonférentiels 43 formée de câbles métalliques en acier 21x23,

- d'une seconde couche de travail 42 formée de câbles métalliques orientés d'un angle égal à 30° et croisés avec les câbles métalliques de la couche 41, les câbles de chacune des couches de travail 41, 42 étant orientés de part et d'autre de la direction circonférentielle.

Les câbles métalliques constituant les éléments de renforcement des deux couches de travail sont des câbles de formule 9.35. Ils sont répartis dans chacune des couches de travail avec une distance entre les éléments de renforcement, mesurée selon la normale à la direction de la ligne moyenne du câble égale à 2.2 mm.

L'armature de sommet est elle-même coiffée d'une bande de roulement 5.

Le pneumatique est gonflé à une pression de 9 bars.

La largeur axiale $L_{41}$ de la première couche de travail 41 est égale à 252 mm.

La largeur axiale $L_{42}$ de la deuxième couche de travail 42 est égale à 232 mm.

La largeur axiale $L_{43}$ de la couche d'éléments de renforcement circonférentiels 43 est égale à 194 mm.

La largeur axiale de la bande de roulement $L_5$ est égale à 266 mm.

La largeur axiale maximale L est égale à 315.9 mm.

La masse cumulée des deux couches de travail 41, 42 et de la couche d'éléments de renforcement circonférentiels 43, comprenant la masse des câbles métalliques et des mélanges de calandrage, se monte ainsi à 10.1 Kg.

La différence entre les angles formés par les câbles de la première couche de sommet de travail avec la direction circonférentielle et ceux des câbles de la deuxième couche de sommet de travail est égale à 12°.

L'angle moyen est égal à 23.4° et est bien compris entre 18.6° et 32.7°.

La valeur mesurée de Re est égale à 508.5 mm.

La valeur mesurée de Es est égale à 22.5 mm.

La valeur moyenne RL des rayons mesurés est égale à 401.3 mm.

La valeur Rt déterminée sur le pneumatique est égale à 792 mm.

La valeur calculée de Tc est égale à 308 N/mm.

La valeur calculée de $C_F$ est égale à -0.0029.

La valeur de F1 est égale à 477.2 N.

La valeur de F2 est égale à 323.3 N.

Les forces ruptures des éléments de renforcement des couches de sommet de travail FR1 et FR2 sont égales à 2950 N.

Le ratio d'utilisation du potentiel de rupture F2/FR2 est égal à 11 %.

Le ratio d'utilisation du potentiel de rupture F1/FR1 est égal à 16.2 %.

Le ratio d'utilisation du potentiel de rupture F1/FR1 est 48 % supérieur au ratio d'utilisation du potentiel de rupture F2/FR2.

Différents pneumatiques I1, I2, I3, I4 et I5 selon l'invention sont comparés à différents pneumatiques de référence de même dimension. Les pneumatiques I1, I2, I3, I4 et I5 comportent des couches de calandrages constituées respectivement des mélanges 1, 2, 3, 4 et 5 décrits ci-après.

Des premiers pneumatiques de référence T1 diffèrent des pneumatiques selon l'invention par la nature des mélanges de calandrage des couches de sommet de travail, celles-ci étant constituées du mélange R1 décrit ci-après.

Les différents mélanges utilisés sont listés ci-après, en exprimant pour chacun le module sécant d'élasticité à 10 % d'allongement ainsi que les valeurs $\tan(\delta)_{max}$.

| | Mélange R1 | Mélange 1 | Mélange 2 | Mélange 3 | Mélange 4 | Mélange 5 |
|---|---|---|---|---|---|---|
| NR | 100 | 100 | 100 | 100 | 100 | 100 |
| **Noir** N347 | 52 | | 33 | | | |
| Noir N683 | | | | | 44 | 30 |
| **Noir** N326 | | 47 | | | | |
| Silice 165G | | | | 46 | | |
| Antioxydant (6PPD) | 1 | 1.5 | 1 | 2 | 1 | 1 |
| Acide stéarique | 0.65 | 0.9 | 0.65 | 1 | 0.65 | 0.65 |
| Oxyde de zinc | 9.3 | 7.5 | 9.3 | 8 | 9.3 | 9.3 |

(suite)

| | Mélange R1 | Mélange 1 | Mélange 2 | Mélange 3 | Mélange 4 | Mélange 5 |
|---|---|---|---|---|---|---|
| Sel de Cobalt (AcacCo) | 1.12 | 1.12 | 1.12 | 1.1 | 1.12 | 1.12 |
| Sel de Cobalt (AbietateCo) | | | | | | |
| Silane sur noir | | | | 8.3 | | |
| soufre | 6.1 | 4.5 | 6.1 | 4.8 | 6.1 | 6.1 |
| Accélérateur DCBS | 0.93 | 0.8 | 0.93 | | 0.93 | 0.93 |
| Accélérateur TBBS | | | | 1.01 | | |
| Co-accélérateur DPG | | | | 1.1 | | |
| Retardateur CTP PVI) | 0.25 | 0.15 | 0.25 | 0.2 | 0.25 | 0.25 |
| $MA_{10}$(MPa) | 10.4 | 5.99 | 5.56 | 7.25 | 6.16 | 4.4 |
| $\tan(\delta)_{max}$ | 0.130 | 0.099 | 0.074 | 0.063 | 0.056 | 0.030 |

Les valeurs des constituants sont exprimées en pce (parties en poids pour cent parties d'élastomères.

Des deuxièmes pneumatiques de référence T2 diffèrent des pneumatiques de référence T1 par une armature de sommet formée radialement de l'intérieur à l'extérieur :

- d'une première couche de travail formée de câbles métalliques orientés d'un angle égal à 22°, du même côté que les câbles de la couche de triangulation par rapport à la direction circonférentielle,

- d'une couche d'éléments de renforcement circonférentiels formée de câbles métalliques en acier 21.23, ,

- d'une seconde couche de travail formée de câbles métalliques orientés d'un angle égal à 18° et croisés avec les câbles métalliques de la première couche de travail, les câbles de chacune des couches de travail étant orientés de part et d'autre de la direction circonférentielle,

- d'une couche de protection formées de câbles métalliques élastiques 6.35, dont la distance entre les éléments de renforcement, mesurée selon la normale à la direction de la ligne moyenne du câble est égal à 2.5 mm, orientés d'un angle égal à 18°, du même côté que les câbles de la seconde couche de travail.

Les câbles métalliques des deux couches de travail sont des câbles de formule 9.35. Ils sont répartis dans chacune des couches de travail avec une distance entre les éléments de renforcement, mesurée selon la normale à la direction de la ligne moyenne du câble égale à 2.5 mm.

Le pneumatique de référence T2 est gonflé à une pression de 9 bars.

La largeur axiale de la première couche de travail est égale à 252 mm.

La largeur axiale de la deuxième couche de travail est égale à 232 mm.

La largeur axiale de la couche d'éléments de renforcement circonférentiels 53 est égale à 194 mm.

La largeur axiale de la couche de protection est égale à 188 mm.

La masse cumulée des couches de travail, de la couche de protection et de la couche d'éléments de renforcement circonférentiels des pneumatiques de référence T2, comprenant la masse des câbles métalliques et des mélanges de calandrage, se monte à 12.2 Kg.

La valeur absolue de la différence entre les valeurs absolues des angles formés par les câbles de la première couche de sommet de travail avec la direction circonférentielle et ceux des câbles de la deuxième couche de sommet de travail est égale à 4°.

L'angle moyen est égal à 19.9°.

La valeur de F1 est égale à 410 N.

La valeur de F2 est égale à 424 N.

Les valeurs F1 et F2 sont obtenues par une simulation éléments finis, le nombre élevés de nappes de renforcement dans le sommet ne permettant pas l'utilisation d'un modèle analytique simple.

Les forces ruptures des éléments de renforcement des couches de sommet de travail FR1 et FR2 sont égales à 2600 N.

Le ratio d'utilisation du potentiel de rupture F2/FR2 est égal à 16.3 %.

Le ratio d'utilisation du potentiel de rupture F1/FR1 est égal à 15.8 %.

Le ratio d'utilisation du potentiel de rupture F1/FR1 est 3 % inférieur au ratio d'utilisation du potentiel de rupture F2/FR2.

Des premiers essais d'endurance, particulièrement sollicitant thermiquement, ont été réalisés sur une machine de test imposant à chacun des pneumatiques un roulage ligne droite à une vitesse égale à l'indice de vitesse maximum prescrit pour ledit pneumatique (speed index) sous une charge initiale de 4000 Kg progressivement augmentée pour réduire la durée du test.

D'autres essais d'endurance, particulièrement sollicitant mécaniquement, ont été réalisés sur une machine de tests imposant de façon cyclique un effort transversal et une surcharge dynamique aux pneumatiques. Les essais ont été réalisés pour les pneumatiques selon l'invention avec des conditions identiques à celles appliquées aux pneumatiques de référence.

Les essais ainsi réalisés ont montré que les distances parcourues lors de chacun de ces tests sont sensiblement identiques pour les pneumatiques selon l'invention et les pneumatiques de référence.

Des tests visant à caractériser la résistance à la rupture d'une armature de sommet de pneumatique soumise à des chocs ont également été réalisés. Ces tests consistent à faire rouler un pneumatique, gonflé à une pression recommandée et soumis à une charge recommandée, sur un obstacle ou indenteur cylindrique de diamètre égal à 1.5 pouce, soit 38.1 mm, à tête hémisphérique, et d'une hauteur déterminée, venant en appui au centre de la bande de roulement. La résistance à la rupture est caractérisée par la hauteur critique de l'indenteur, c'est-à-dire la hauteur maximale de l'indenteur entraînant une rupture totale de l'armature de sommet, c'est-à-dire de la rupture de toutes les couches de sommet. Les valeurs expriment l'énergie nécessaire pour obtenir la rupture du bloc sommet. Les valeurs sont exprimées à partir d'une base 100 correspondant à la valeur mesurée pour le pneumatique de référence T2.

| 11, 12, 13, 14,15 | 130 |
|---|---|
| Référence T1 | 125 |
| Référence T2 | 100 |

Ces résultats montrent que malgré un allégement du pneumatique, notamment par une diminution de la masse de son armature sommet, l'énergie à rupture lors d'un choc sur la surface de la bande de roulement des pneumatiques selon l'invention est supérieure à celle du pneumatique T2 et légèrement supérieure à celle du pneumatique T1.

Des derniers tests d'endurance visant à reproduire des conditions de roulage combinant la vitesse du véhicule et la nature du sol particulièrement agressive ont été réalisés. Ces tests reproduisent ainsi des conditions extrêmes notamment des véhicules "Poids-Lourds" de type «approche chantier» .

Ces derniers tests consistent à reproduire vingt-cinq fois une phase de roulage de 2 heures à 100 km/h sur circuit dans les conditions de charge et de pression indiquées sur le pneumatique suivie d'une phase de roulage de 12 minutes à 35 km/h sur piste caillouteuse.

La phase de roulage à faible vitesse sur une piste caillouteuse a pour but de pénaliser l'endurance suite à des chocs répétés sur la bande de roulement.

La phase de roulage à vitesse élevée sur circuit a pour but d'augmenter la température du pneumatique. Cela rend le pneumatique plus sensible aux effets des chocs répétés sur la bande de roulement et cela favorise la propagation de fissures initiées dans la phase de roulage sur piste caillouteuse.

A la fin du roulage, les pneumatiques sont contrôlés en shearographie et décortiquées pour analyser les éventuels endommagements. Il s'agit d'une analyse visuelle permettant de comparer les éventuelles fissures et leu propagation. Les pneumatiques sont notés et comparés entre eux. Une note supérieure à 100 correspond à un pneumatique moins endommagé. Une valeur 100 est attribué au pneumatique le plus endommagé.

Seuls les pneumatiques selon l'invention I1 et I4 ont été testés.

| | Note |
|---|---|
| I4 | 120 |
| I1 | 115 |
| Référence T1 | 105 |
| Référence T2 | 100 |

A la fin du roulage les pneumatiques selon l'invention I1 et I4 présentent des dommages moins étendus que les pneumatiques de référence T1 et T2.

Au cours de ces derniers tests d'endurance, la température des pneumatiques en extrémités de bloc sommet a été mesurée suite à la première phase de roulage de 2 heures à 100 km/h sur circuit.

Durant ces derniers tests, des pneumatiques de référence T3 qui diffèrent des pneumatiques de référence T2 par la nature des mélanges de calandrage des couches de sommet de travail, celles-ci étant constituées du mélange 4, ont également été mesurés.

|  | Température |
|---|---|
| I4 | 90°C |
| I1 | 91°C |
| Référence T1 | 94°C |
| Référence T3 | 95°C |
| Référence T2 | 99°C |

Ces résultats montrent que les pneumatiques selon l'invention présentent effectivement des températures moins élevées que les pneumatiques de référence.

**Revendications**

1.   - Pneumatique (1), destiné à être monté sur une jante creuse de type 15° drop center, comprenant une armature de carcasse radiale (2), ledit pneumatique comprenant une armature de sommet (4), comprenant deux couches de sommet de travail d'éléments (41, 42) de renforcement insérés entre deux couches de calandrage de mélange caoutchouteux, croisés d'une couche à l'autre en faisant avec la direction circonférentielle des angles ($\alpha$1, $\alpha$2) supérieurs à 8°, lesdits angles $\alpha$1 et $\alpha$2 étant orientés de part et d'autre de la direction circonférentielle, et au moins une couche d'éléments de renforcement circonférentiels (43), l'armature de sommet (4) étant coiffée radialement d'une bande de roulement (5), ladite bande de roulement étant réunie à deux bourrelets (3) par l'intermédiaire de deux flancs, dans lequel :

   - lesdites deux couches de sommet de travail (41, 42) et ladite au moins une couche d'éléments de renforcement circonférentiels (43) étant seules présentes pour constituer l'armature de sommet (4) sur au moins 75 % de la largeur axiale de l'armature de sommet (5),
   - les éléments de renforcement de la couche de sommet de travail (42) radialement la plus extérieure formant un angle ($\alpha$2) avec la direction circonférentielle supérieur en valeur absolue à l'angle ($\alpha$1) formé par les éléments de renforcement de la couche de sommet de travail (41) radialement la plus intérieure avec la direction circonférentielle,
   - la valeur absolue de la différence entre les valeurs absolues des angles ($\alpha$2) et ($\alpha$1) est supérieure à 7°,
   - l'angle moyen $\alpha$ satisfait la relation :

$$13+131*\exp(-L/100) < \alpha < 28+110*\exp(-L/100),$$

   $\alpha$ étant défini par la relation $\alpha$ = Arctan$((\tan(|\alpha1|)*\tan(|\alpha2|))^{1/2})$, L étant la largeur maximum du pneumatique mesurée selon la direction axiale et exprimée en mm,

   **caractérisé en ce que** le module sécant d'élasticité à 10 % d'allongement et à une température de 23 °C d'au moins une couche de calandrage d'au moins une couche de sommet de travail est inférieur à 8,5 MPa.

2.   - Pneumatique selon la revendication 1, **caractérisé en ce que** la valeur maximale de tan($\delta$), noté tan($\delta$)$_{max}$, de ladite au moins une couche de calandrage d'au moins une couche de sommet de travail est inférieure à 0.100.

3.   - Pneumatique selon la revendication 1 ou 2, **caractérisé en ce que** ladite au moins une couche de calandrage d'au moins une couche de sommet de travail est un mélange élastomérique à base de caoutchouc naturel ou de polyisoprène synthétique à majorité d'enchaînements cis-1,4 et éventuellement d'au moins un autre élastomère diénique, le caoutchouc naturel ou le polyisoprène synthétique en cas de coupage étant présent à un taux majoritaire par rapport au taux de l'autre ou des autres élastomères diéniques utilisés et d'une charge renforçante constituée :

a) soit par du noir de carbone de surface spécifique BET supérieure à 60 m$^2$/g,

   i. employé à un taux compris entre 20 et 40 pce lorsque l'indice de structure du noir (COAN) est supérieur à 85,

   ii. employé à un taux compris entre 20 et 60 pce lorsque l'indice de structure du noir (COAN) est inférieur à 85,

b) soit par du noir de carbone de surface spécifique BET inférieure à 60 m$^2$/g, quelle que soit son indice de structure, employé à un taux compris entre 20 et 80 pce, et de préférence entre 30 et 50 pce,

c) soit par une charge blanche de type silice et/ou alumine comportant des fonctions de surface SiOH et/ou AlOH choisie dans le groupe formé par les silices précipitées ou pyrogénées, les alumines ou les aluminosilicates ou bien encore les noirs de carbone modifiés en cours ou après la synthèse de surface spécifique BET comprise entre 30 et 260 m$^2$/g employée à un taux compris entre 20 et 80 pce, et de préférence entre 30 et 50 pce,

d) soit par un coupage de noir de carbone décrit en (a) et/ou de noir de carbone décrit en (b) et/ou une charge blanche décrite en (c), dans lequel le taux global de charge est compris entre 20 et 80 pce, et de préférence entre 40 et 60 pce.

**4.**    - Pneumatique (1) selon l'une des revendications 1 à 3, **caractérisé en ce que** le ratio d'utilisation du potentiel de rupture F2/FR2 de la couche de sommet de travail (42) radialement la plus extérieure est inférieur à 1/6, dans lequel :

FR2 est la force rupture en extension uniaxiale de chacun des câbles de la couche de sommet de travail radialement la plus extérieure,

$$F2 = p_2 * Tc * [(\tan(|\alpha 1|)/((\tan(|\alpha 1|)+\tan(|\alpha 2|))) / \cos^2(|\alpha 2|) + C_F],$$

avec

$$Tc = 0.078 * P * Rs * ( 1-(Rs^2-R_L^2)/(2*Rt*Rs) ),$$

P : la pression de gonflage nominale du pneumatique selon l'ETRTO,

$$C_F = 0.00035*(\min((L-80) / \sin(|\alpha 1|), (L-80) / \sin(|\alpha 2|), 480)-480),$$

$p_2$ : le pas de pose des éléments de renforcement de la couche de sommet de travail radialement la plus extérieure, mesuré perpendiculairement aux éléments de renforcement au niveau du médian circonférentiel,

$$Rs = Re - Es,$$

Re : rayon extérieur du pneumatique mesuré au point radialement le plus extérieur sur la surface de la bande de roulement du pneumatique, ladite surface étant extrapolée pour combler les éventuels creux,

Es : distance radiale entre le point radialement le plus à l'extérieur du pneumatique et sa projection orthogonale sur la face radialement extérieure d'un élément de renforcement de la couche de sommet de travail radialement la plus à l'intérieur,

RL : moyenne des rayons des points axialement les plus à l'extérieur de chaque côté du pneumatique,

Rt : le rayon du cercle passant par trois points situés sur la surface extérieure de la bande de roulement en dehors des creux, définis à partir d'une extrémité d'épaulement à des distances axiales respectives égales à ¼, ½ et ¾ de la largeur de la bande de roulement.

**5.**    - Pneumatique (1) selon la revendication 4, **caractérisé en ce que** le ratio d'utilisation du potentiel de rupture F2/FR2 de la couche de sommet de travail (42) radialement la plus extérieure est inférieur à 1/8.

**6.**    - Pneumatique (1) selon l'une des revendications 4 ou 5, **caractérisé en ce que** le ratio d'utilisation du potentiel de rupture F1/FR1 de la couche de sommet de travail (41) radialement la plus intérieure est inférieur à 1/3, dans lequel :

FR1 est la force rupture en extension uniaxiale de chacun des câbles de la couche de travail radialement la plus intérieure,

$$F1 = p_1 * Tc * [(\tan(|\alpha 2|)/((\tan(|\alpha 1|)+\tan(|\alpha 2|))) / \cos^2(|\alpha 1|) + C_F],$$

avec

$p_1$ : le pas de pose des éléments de renforcement de la couche de sommet de travail radialement la plus intérieure, mesuré perpendiculairement aux éléments de renforcement au niveau du plan médian circonférentiel.

7. - Pneumatique (1) selon la revendication 6, **caractérisé en ce que** le ratio d'utilisation du potentiel de rupture F1/FR1 de la couche de travail (41) radialement la plus intérieure est au moins 30 % supérieur au ratio d'utilisation du potentiel de rupture F2/FR2 de la couche de travail (42) radialement la plus extérieure.

8. - Pneumatique (1) selon l'une des revendications précédentes, **caractérisé en ce que** les deux couches de sommet de travail (41, 42) et ladite au moins une couche d'éléments de renforcement circonférentiels (43) sont seules présentes pour constituer l'armature de sommet sur la totalité de la largeur axiale de l'armature de sommet (4).

9. - Pneumatique (1) selon l'une des revendications précédentes, **caractérisé en ce que** les largeurs axiales des deux couches de sommet de travail (41, 42) sont supérieures à la largeur axiale de ladite au moins une couche d'éléments de renforcement circonférentiels (43).

10. - Pneumatique (1) selon l'une des revendications précédentes, **caractérisé en ce que** ladite au moins une couche d'éléments de renforcement circonférentiels (43) est radialement disposée entre les deux couches de sommet de travail (41, 42).

11. - Pneumatique (1) selon la revendication 9 ou 10, **caractérisé en ce que** les couches de sommet de travail (41, 42) sont de part et d'autre du plan équatorial et dans le prolongement axial immédiat de ladite au moins une couche d'éléments de renforcement circonférentiels (43) couplées sur une largeur axiale, pour être ensuite découplées par des profilés de mélange de caoutchouc au moins sur le restant de la largeur commune aux dites deux couches de travail (41, 42).

12. - Pneumatique (1) selon l'une des revendications précédentes, **caractérisé en ce que** les éléments de renforcement de ladite au moins une couche d'éléments de renforcement circonférentiels (43) sont des éléments de renforcement métalliques présentant un module sécant à 0,7 % d'allongement compris entre 10 et 120 GPa et un module tangent maximum inférieur à 150 GPa.

13. - Pneumatique (1) selon l'une des revendications précédentes, **caractérisé en ce que** les éléments de renforcement des couches de sommet de travail (41, 42) sont inextensibles.

**Patentansprüche**

1. Reifen (1), der dazu bestimmt ist, auf einer hohlen Felge vom Typ 15°-Steilschulterfelge montiert zu werden, und der eine radiale Karkassenbewehrung (2) beinhaltet, wobei der Reifen Folgendes beinhaltet: eine Gürtelbewehrung (4), die zwei Arbeitsgürtellagen aus Festigkeitselementen (41, 42) beinhaltet, die zwischen zwei Kalandrierschichten aus Kautschukmischung eingefügt sind, die sich von einer Lage zur anderen kreuzen, wobei sie mit der Umfangsrichtung Winkel ($\alpha 1$, $\alpha 2$) von mehr als 8° bilden, wobei die Winkel $\alpha 1$ und $\alpha 2$ beidseits der Umfangsrichtung ausgerichtet sind, und mindestens eine Lage aus umfänglichen Festigkeitselementen (43), wobei die Gürtelbewehrung (4) radial von einem Laufstreifen (5) überdeckt wird, wobei der Laufstreifen über zwei Flanken mit zwei Wülsten (3) verbunden ist, wobei:

- die zwei Arbeitsgürtellagen (41, 42) und die mindestens eine Lage aus umfänglichen Festigkeitselementen (43) allein vorhanden sind, um die Gürtelbewehrung (4) über mindestens 75 % der axialen Breite der Gürtelbewehrung (5) auszubilden,
- die Festigkeitselemente der radial äußersten Arbeitsgürtellage (42) einen Winkel ($\alpha 2$) mit der Umfangsrichtung bilden, der vom absoluten Wert her größer als der Winkel ($\alpha 1$) ist, der von den Festigkeitselementen der radial innersten Arbeitsgürtellage (41) mit der Umfangsrichtung gebildet wird,
- der absolute Wert der Differenz zwischen den absoluten Werten der Winkel ($\alpha 2$) und ($\alpha 1$) größer als 7° ist,
- der mittlere Winkel $\alpha$ die folgende Gleichung erfüllt:

$$13+131*exp(-L/100) < \alpha < 28+110*exp(-L/100),$$

wobei $\alpha$ durch die Gleichung $\alpha$ = Arctan((tan($|\alpha1|$)*tan($|\alpha2|$))$^{1/2}$) definiert ist, wobei L die maximale Breite des Reifens ist, die entlang der axialen Richtung gemessen und in mm ausgedrückt wird, **dadurch gekennzeichnet, dass** das Elastizitätssekantenmodul bei 10 % Dehnung und einer Temperatur von 23 °C mindestens einer Kalandrierschicht mindestens einer Arbeitsgürtellage kleiner als 8,5 MPa ist.

2. Reifen nach Anspruch 1, **dadurch gekennzeichnet, dass** der maximale Wert von tan($\delta$), bezeichnet als tan($\delta$)$_{max}$, der mindestens einen Kalandrierschicht mindestens einer Arbeitsgürtellage kleiner als 0,100 ist.

3. Reifen nach Anspruch 1 oder 2, **dadurch gekennzeichnet, dass** die mindestens eine Kalandrierschicht mindestens einer Arbeitsgürtellage eine Elastomermischung auf Basis von Naturkautschuk oder synthetischem Polyisopren mit mehrheitlich cis-1,4-Verkettungen und gegebenenfalls mindestens einem weiteren Dienelastomer, wobei der Naturkautschuk oder das synthetische Polyisopren im Fall eines Verschnitts in Bezug auf den Anteil des oder der weiteren verwendeten Dienelastomere in einem mehrheitlichen Anteil vorhanden ist, und einem verstärkenden Füllstoff ist, der aus Folgendem besteht:

   a) entweder Ruß mit einer spezifischen BET-Oberfläche größer als 60 m$^2$/g,

      i. eingesetzt in einem Anteil zwischen 20 und 40 phe, wenn der Strukturindex des Rußes (COAN) größer als 85 ist,
      ii. eingesetzt in einem Anteil zwischen 20 und 60 phe, wenn der Strukturindex des Rußes (COAN) kleiner als 85 ist,

   b) oder Ruß mit einer spezifischen BET-Oberfläche kleiner als 60 m$^2$/g, unabhängig von seinem Strukturindex, eingesetzt in einem Anteil zwischen 20 und 80 phe und vorzugsweise zwischen 30 und 50 phe,
   c) oder einem weißen Füllstoff vom Siliciumdioxid- und/oder Aluminiumoxid-Typ mit SiOH- und/oder AlOH-Oberflächenfunktionen, ausgewählt aus der Gruppe, die aus gefällten oder pyrogenen Siliciumdioxiden, Aluminiumoxiden oder Aluminosilikaten oder auch während oder nach der Synthese modifizierten Rußen mit einer spezifischen BET-Oberfläche zwischen 30 und 260 m$^2$/g gebildet wird, eingesetzt in einem Anteil zwischen 20 und 80 phe und vorzugsweise zwischen 30 und 50 phe,
   d) oder einem Verschnitt aus Ruß, der in (a) beschrieben wird, und/oder aus Ruß, der in (b) beschrieben wird, und/oder einem weißen Füllstoff, der in (c) beschrieben wird, wobei der Gesamtanteil an Füllstoff zwischen 20 und 80 phe und vorzugsweise zwischen 40 und 60 phe beträgt.

4. Reifen (1) nach einem der Ansprüche 1 bis 3, **dadurch gekennzeichnet, dass** der Ausschöpfungsgrad des Bruchpotentials F2/FR2 der radial äußersten Arbeitsgürtellage (42) kleiner als 1/6 ist, wobei:

   FR2 die Bruchkraft bei uniaxialer Dehnung jedes der Korde der radial äußersten Arbeitsgürtellage ist,
   F2 = $p_2$ * Tc * [(tan($|\alpha1|$)/((tan($|\alpha1|$)+tan($|\alpha2|$))) / cos$^2$($|\alpha2|$) + C$_F$], mit

$$Tc = 0,078 * P * Rs* (1-(Rs^2-R_L^2)/(2*Rt*Rs)),$$

   P: Nennfülldruck des Reifens nach ETRTO,
   C$_F$ = 0,00035* (min ((L-80) / sin($|\alpha1|$), (L-80) / sin($|\alpha2|$), 480)-480),
   $p_2$: Schrittweite der Anbringung der Festigkeitselemente der radial äußersten Arbeitsgürtellage, gemessen senkrecht zu den Festigkeitselementen am Umfangsmittel,

$$Rs = Re - Es,$$

   Re: Außenradius des Reifens, gemessen an dem radial äußersten Punkt auf der Oberfläche des Laufstreifens des Reifens, wobei die Oberfläche extrapoliert wird, um die möglichen Hohlräume auszugleichen,
   Es: radialer Abstand zwischen dem radial äußersten Punkt des Reifens und seiner orthogonalen Projektion auf die radial äußere Fläche eines Festigkeitselements der radial innersten Arbeitsgürtellage,
   RL: Mittelwert der Radien der axial äußersten Punkte jeder Seite des Reifens,
   Rt: Radius des Kreises, der durch drei auf der Außenoberfläche des Laufstreifens außerhalb der Hohlräume gelegene Punkte verläuft, die ausgehend von einem Schulterende in jeweiligen axialen Abständen von ¼, ½ und ¾ der Breite des Laufstreifens definiert werden.

5. Reifen (1) nach Anspruch 4, **dadurch gekennzeichnet, dass** der Ausschöpfungsgrad des Bruchpotentials F2/FR2 der radial äußersten Arbeitsgürtellage (42) kleiner als 1/8 ist.

6. Reifen (1) nach einem der Ansprüche 4 oder 5, **dadurch gekennzeichnet, dass** der Ausschöpfungsgrad des Bruchpotentials F1/FR1 der radial innersten Arbeitsgürtellage (41) kleiner als 1/3 ist, wobei:

   FR1 die Bruchkraft bei uniaxialer Dehnung jedes der Korde der radial innersten Arbeitslage ist,
   
   $F1 = p_1 * Tc * [(\tan(|\alpha2|)/((\tan(|\alpha1|)+\tan(|\alpha2|))) / \cos^2(|\alpha1|) + C_F]$, mit
   
   $p_1$: Schrittweite der Anbringung der Festigkeitselemente der radial innersten Arbeitsgürtellage, gemessen senkrecht zu den Festigkeitselementen an der Umfangsmittelebene.

7. Reifen (1) nach Anspruch 6, **dadurch gekennzeichnet, dass** der Ausschöpfungsgrad des Bruchpotentials F1/FR1 der radial innersten Arbeitslage (41) mindestens 30 % größer als der Ausschöpfungsgrad des Bruchpotentials F2/FR2 der radial äußersten Arbeitslage (42) ist.

8. Reifen (1) nach einem der vorhergehenden Ansprüche, **dadurch gekennzeichnet, dass** die zwei Arbeitsgürtellagen (41, 42) und die mindestens eine Lage aus umfänglichen Festigkeitselementen (43) allein vorhanden sind, um die Gürtelbewehrung über die gesamte axiale Breite der Gürtelbewehrung (4) auszubilden.

9. Reifen (1) nach einem der vorhergehenden Ansprüche, **dadurch gekennzeichnet, dass** die axialen Breiten der zwei Arbeitsgürtellagen (41, 42) größer sind als die axiale Breite der mindestens einen Lage aus umfänglichen Festigkeitselementen (43).

10. Reifen (1) nach einem der vorhergehenden Ansprüche, **dadurch gekennzeichnet, dass** die mindestens eine Lage aus umfänglichen Festigkeitselementen (43) radial zwischen den zwei Arbeitsgürtellagen (41, 42) angeordnet ist.

11. Reifen (1) nach Anspruch 9 oder 10, **dadurch gekennzeichnet, dass** die Arbeitsgürtellagen (41, 42) zu beiden Seiten der Äquatorialebene und in der unmittelbaren axialen Verlängerung der mindestens einen Lage aus umfänglichen Festigkeitselementen (43) über eine axiale Breite gekoppelt sind, um anschließend mindestens über den Rest der Breite, die den zwei Arbeitslagen (41, 42) gemein ist, durch Profile aus einer Kautschukmischung entkoppelt zu werden.

12. Reifen (1) nach einem der vorhergehenden Ansprüche, **dadurch gekennzeichnet, dass** die Festigkeitselemente der mindestens einen Lage aus umfänglichen Festigkeitselementen (43) metallische Festigkeitselemente sind, die einen Sekantenmodul bei 0,7 % Dehnung zwischen 10 und 120 GPa und einen maximalen Tangentenmodul von weniger als 150 GPa aufweisen.

13. Reifen (1) nach einem der vorhergehenden Ansprüche, **dadurch gekennzeichnet, dass** die Festigkeitselemente der Arbeitsgürtellagen (41, 42) nicht dehnbar sind.

**Claims**

1. -Tyre (1), intended to be mounted on a drop-centre rim of the 15° drop-centre type, comprising a radial carcass reinforcement (2), said tyre comprising a crown reinforcement (4) comprising two working crown layers of reinforcing elements (41, 42) which are inserted between two skim coat layers of rubber compound and that are crossed from one layer to the next and make angles ($\alpha1$, $\alpha2$) of greater than 8° with the circumferential direction, said angles $\alpha1$ and $\alpha2$ being oriented one on each side of the circumferential direction, and at least one layer of circumferential reinforcing elements (43), the crown reinforcement (4) being capped radially by a tread (5), said tread being connected to two beads (3) by two sidewalls, wherein:

   - said two working crown layers (41, 42) and said at least one layer of circumferential reinforcing elements (43) are the only ones present to form the crown reinforcement (4) over at least 75% of the axial width of the crown reinforcement (5),
   - the reinforcing elements of the radially outermost working crown layer (42) forming an angle ($\alpha2$) with the circumferential direction that is greater in terms of absolute value than the angle ($\alpha1$) formed by the reinforcing elements of the radially innermost working crown layer (41) with the circumferential direction,
- the absolute value of the difference between the absolute values of the angles ($\alpha$2) and ($\alpha$1) is greater than 7°,
- the mean angle $\alpha$ satisfies the relationship:

$$13+131*\exp(-L/100) < \alpha < 28+110*\exp(-L/100),$$

$\alpha$ being defined by the relationship $\alpha$ = Arctan((tan($|\alpha1|$)*tan($|\alpha2|$))$^{1/2}$), L being the maximum width of the tyre measured in the axial direction and expressed in mm,

**characterized in that** the secant elastic modulus at 10% elongation, at a temperature of 23°C, of at least one skim coat layer of at least one working crown layer is less than 8.5 MPa.

2. - Tyre according to Claim 1, **characterized in that** the maximum value of tan($\delta$), denoted tan($\delta$)$_{max}$, of said at least one skim coat layer of at least one working crown layer is less than 0.100.

3. - Tyre according to Claim 1or 2, **characterized in that** said at least one skim coat layer of at least one working crown layer is an elastomer compound based on natural rubber or on synthetic polyisoprene with a predominance of cis-1,4-linkages and optionally on at least one other diene elastomer, the natural rubber or synthetic polyisoprene in the case of a blend being present at a predominant content relative to the content of the other diene elastomer(s) used, and on a reinforcing filler composed:

   a) either of carbon black with a BET specific surface area of greater than 60 m$^2$/g,

       i. used at a content of between 20 and 40 phr when the compressed oil absorption number (COAN) of the carbon black is greater than 85,
       ii. used at a content of between 20 and 60 phr when the compressed oil absorption number (COAN) of the carbon black is less than 85,

   b) or of carbon black with a BET specific surface area of less than 60 m$^2$/g, whatever its compressed oil absorption number, used at a content of between 20 and 80 phr and preferably between 30 and 50 phr,
   c) or of a white filler of silica and/or alumina type comprising SiOH and/or AlOH surface functional groups, selected from the group consisting of precipitated or fumed silicas, aluminas and aluminosilicates, or alternatively carbon blacks modified during or after the synthesis having a BET specific surface area of between 30 and 260 m$^2$/g, used at a content of between 20 and 80 phr and preferably between 30 and 50 phr,
   d) or of a blend of carbon black described in (a) and/or of carbon black described in (b) and/or a white filler described in (c), in which the overall content of filler is between 20 and 80 phr and preferably between 40 and 60 phr.

4. - Tyre (1) according to one of Claims 1 to 3, **characterized in that** the rupture potential index F2/FR2 of the radially outermost working crown layer (42) is less than 1/6, where:

   FR2 is the breaking force in uniaxial extension of each of the cords of the radially outermost working crown layer,

   $$F2 = p_2 * Tc * [(\tan(|\alpha1|)/((\tan(|\alpha1|)+\tan(|\alpha2|))) / \cos^2(|\alpha2|) + C_F],$$

   where

   $$Tc = 0.078 * P * Rs * (1-(Rs^2-RL^2)/(2*Rt*Rs)),$$

   P is the nominal inflation pressure of the tyre according to the ETRTO,

   $$C_F = 0.00035*(\min((L-80) / \sin(|\alpha1|), (L-80) / \sin(|\alpha2|), 480)-480),$$

   $p_2$ is the pitch at which the reinforcing elements of the radially outermost working crown layer are laid, measured perpendicularly to the reinforcing elements at the circumferential median,

$$Rs = Re - Es,$$

Re is the external radius of the tyre, measured at the radially outermost point on the tread surface of the tyre, said surface being extrapolated in order to fill any voids there might be,

Es is the radial distance between the radially outermost point of the tyre and the orthogonal projection thereof onto the radially exterior face of a reinforcing element of the radially innermost working crown layer,

RL is the mean of the radii of the axially outermost points on each side of the tyre,

Rt is the radius of the circle passing through three points situated on the outer surface of the tread outside of the voids, defined from a shoulder end at respective axial distances equal to ¼, ½ and ¾ of the width of the tread.

5. - Tyre (1) according to Claim 4, **characterized in that** the rupture potential index F2/FR2 of the radially outermost working crown layer (42) is less than 1/8.

6. - Tyre (1) according to one of Claims 4 and 5 **characterized in that** the rupture potential index F1/FR1 of the radially innermost working crown layer (41) is less than 1/3, where:

FR1 is the breaking force in uniaxial extension of each of the cords of the radially innermost working layer,

$$F1 = p_1 * Tc * [(\tan(|\alpha2|)/((\tan(|\alpha1|)+\tan(|\alpha2|))) / \cos^2(|\alpha1|) + C_F],$$

where

$p_1$ is the pitch at which the reinforcing elements of the radially innermost working crown layer are laid, measured perpendicularly to the reinforcing elements at the circumferential median plane.

7. - Tyre (1) according to Claim 6, **characterized in that** the rupture potential index F1/FR1 of the radially innermost working layer (41) is at least 30% higher than the rupture potential index F2/FR2 of the radially outermost working layer (42).

8. - Tyre (1) according to one of the preceding claims, **characterized in that** the two working crown layers (41, 42) and said at least one layer of circumferential reinforcing elements (43) are the only ones present to form the crown reinforcement over the entirety of the axial width of the crown reinforcement (4).

9. - Tyre (1) according to one of the preceding claims, **characterized in that** the axial widths of the two working crown layers (41, 42) are greater than the axial width of said at least one layer of circumferential reinforcing elements (43).

10. - Tyre (1) according to one of the preceding claims, **characterized in that** said at least one layer of circumferential reinforcing elements (43) is positioned radially between the two working crown layers (41, 42).

11. - Tyre (1) according to Claim 9 or 10, **characterized in that** the working crown layers (41, 42) are, on each side of the equatorial plane and in the immediate axial continuation of said at least one layer of circumferential reinforcing elements (43), coupled over an axial width and then decoupled by profiled elements of rubber compound at least over the remainder of the width that said two working layers (41, 42) have in common.

12. - Tyre (1) according to one of the preceding claims, **characterized in that** the reinforcing elements of said at least one layer of circumferential reinforcing elements (43) are metal reinforcing elements having a secant modulus at 0.7% elongation of between 10 and 120 GPa and a maximum tangent modulus of less than 150 GPa.

13. - Tyre (1) according to one of the preceding claims, **characterized in that** the reinforcing elements of the working crown layers (41, 42) are inextensible.

**Figure**

**EP 4 323 202 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004076204 A
- FR 1389428
- FR 2222232
- WO 9924269 A
- WO 2017149223 A
- WO 2017198952 A1
- EP 0799854 A

**Littérature non-brevet citée dans la description**

- **BRUNAUER** ; **EMMET** ; **TELLER**. *The Journal of the American Chemical Society*, February 1938, vol. 60, 309